# EUROPEAN PATENT SPECIFICATION

(11) **EP 1 117 694 B1**
(45) Date of publication and mention of the grant of the patent: **02.02.2005**
(21) Application number: 99941933.6
(22) Date of filing: 19.07.1999
(51) Int. Cl.: C08B 11/193, C09D 7/12

(54) **NON-IONIC CELLULOSE ETHER WITH IMPROVED THICKENING PROPERTIES**
NICHT-IONISCHE CELLULOSEETHER MIT VERBESSERTEN VERDICKUNGSEIGENSCHAFTEN
ETHER DE CELLULOSE NON IONIQUE PRESENTANT DES PROPRIETES D'EPAISSISSEMENT AMELIOREES

(30) Priority: 06.08.1998 SE 9802676
(43) Date of publication of application: 25.07.2001
(73) Proprietor: AKZO NOBEL N.V., 6800 SB Arnhem (NL)
(72) Inventor: KARLSON, Leif, S-444 55 Stenungsund (SE)
(74) Representative: Alferink, Petrus J.T.
(86) International application number: PCT/SE1999/001291
(87) International publication number: WO 2000/008058

(56) References cited:
- EP-A1- 0 390 240
- US-A- 4 228 277
- US-A- 5 140 099

## Description

This invention relates to new nonionic cellulose ethers with improved thickening effects, especially in paint compositions. The improvements depend on the presence of hydrophobic substituents having a poly(oxyethylene) spacer between a large aliphatic group and the linkage to the cellulose ether.

The US Patent 4 228 277 discloses associative water-soluble nonionic cellulose ethers of the so called associative type. They contain as a modifying substituent a C₁₀ to C₂₄ long chain alkyl group which may be introduced by reacting a water-soluble cellulose ether and a suitable amount of the corresponding C₁₀ to C₂₄ epoxide.

In EP-A-390 240 associative nonionic cellulose ethers are described which may contain hydrophobic substituents of the formula 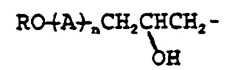 where R is a hydrophobic group containing 8-36 carbon atoms, A is an alkylenoxy group having 2-3 carbon atoms and n is a number from 0 to 6. In Example F the publication discloses an ethyl hydroxyethyl cellulose ether containing the hydrophobic substituent 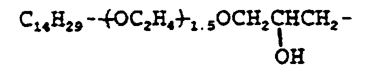 The degree of substitution of this group was 0.016.

It has now been found that the properties of the prior art nonionic cellulose ethers are further improved if they have a DP viscosity of 15-200 mPa·s and contain a hydrophobic modifying group of the general formula 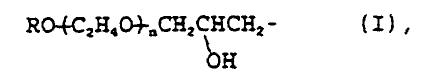 where R is an aliphatic group of 12-22 carbon atoms and n is a number from 3 to 7 with a degree of substitution of the hydrophobic group of 0.003-0.012. The hydrophobically modified cellulose ether may have a viscosity of 20-15000 mPa·s, suitably 100-12000 mPa·s, and preferably 150-4000 mPa·s, measured in a 1% by weight water solution with a StressTech rheometer from Rheologica, equipped with a 4 cm 1° cone and plate system, at 20°C ± 0.1°C. The rheometer was put in the constant shear mode and all the viscosities were measured at the newtonian plateau, characterized by a shear rate independent viscosity.

Extensive studies have shown that the length of the spacer, that is to say the length of the hydrophilic group (̵C₂H₄O)̵ₙ positively affects the thickening, levelling and high shear viscosity in paint compositions. For example, the contribution of the thickening effect of the group 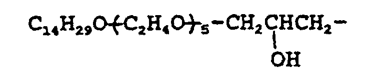 is higher than the effect of the group 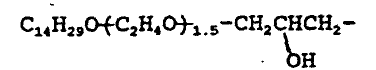 Very surprising is also the fact that the thickening effect of the long spacer is more pronounced the larger the aliphatic group is. Preferably R is an aliphatic group of 14-20 carbon atoms and n is a number from 3 to 5. Even if larger aliphatic groups and higher values of n will further improve the viscosity, such high viscosities will normally not be required.

Besides the hydrophobic group the cellulose ether may contain lower alkyl substituents such as methyl, ethyl or propyl, or hydroxyalkyl substituents as hydroxyethyl, hydroxypropyl or hydroxybutyl or combinations thereof. The substituent and the degree of substitution are chosen so that the associative cellulose ethers of the invention become water-soluble or water-dispersable.

It has also been found that cellulose ethers, substituted with a group of the formula I and having a low degree of polymerisation, have remarkably favourable properties. These cellulose ethers have a unique combination of high associative thickening effect, high hydrophilicity and a comparatively low thickening effect depending on the length of the cellulose chain. The unique combination of properties depends on the fact that the hydrophilicity of the large spacer of the group I increases the hydrophilicity of the cellulose ether and at the same time the associative thickening effect of the group I. The unique properties of these cellulose ethers can for example be utilized to improve the levelling, sagging and spatter of paint compositions.

The differences in DP between cellulose ethers may easily be measured by determining the "DP viscosity" in a blend of diethylene glycol monobutylether and water in a weight ratio of 20:80. In such a blend all hydrophobic associations are broken and the viscosity depends on the length of the cellulose chain. In this context the DP viscosity means the viscosity of 1% by weight of cellulose ether dissolved in the blend divided by 2.7. The DP viscosity value indicates an average DP value of the cellulose ether. According to the invention the cellulose ethers have a DP viscosity of 15-200 mPa·s. In paint compositions the DP viscosity of the cellulose ethers are preferably 20-100 mPa·s.

The cellulose ethers of the invention may be prepared by using known process steps. For example an alkali cellulose and suitable reactants can be reacted in the presence of an alkaline catalyst in order to introduce low alkyl groups and/or hydroxyalkyl groups in such amounts that the intermediate cellulose ethers obtained are water soluble. This intermediate cellulose ether product and a reactant having the formula 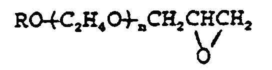 in which R and n have the meaning mentioned above, are then reacted at an elevated temperature and in the presence of an alkaline catalyst to form a cellulose ether according to the invention.

Suitable water-soluble ethers to which the hydrophobic group is added are alkyl cellulose, alkyl hydroxyalkyl cellulose and hydroxyalkyl cellulose. Specific examples of such cellulose ethers include methyl hydroxyethyl cellulose, methyl hydroxypropyl cellulose, hydroxyethyl cellulose, methyl cellulose, hydroxyethyl hydroxypropyl cellulose, ethyl hydroxyethyl cellulose, methyl ethyl hydroxyethyl cellulose and methyl hydroxyethyl hydroxypropyl cellulose. Preferred cellulose ethers are alkyl hydroxyalkyl celluloses, such as methyl hydroxyethyl cellulose, methyl ethyl hydroxyethyl cellulose and ethyl hydroxyethyl cellulose; and hydroxyethyl cellulose.

The hydrophobically modified cellulose ethers of the invention may advantageously be used as a colloid stabilizer, thickener or rheology modifier. Typical application areas are aqueous paint formulations, such as latex paints; cosmetics, such as shampoos and conditioners; detergent compositions, such as surface cleaners and compositions for laundry; and paper coating compositions.

The cellulose ethers may advantageously be used in water-based flat, semi-flat and semi-gloss paints. The amounts added of the cellulose ethers vary depending on both the composition of the paints and the substitution and viscosity of the cellulose ethers, but normally the addition is 0.2-1% by weight of the paints. Suitable binders are emulsion binders, such as alkyd resins, and latex binders, such as polyvinyl acetate, copolymers of vinyl acetate and acrylate, copolymers of vinyl acetate and ethylene, copolymers of vinyl acetate, ethylene and vinyl chloride and copolymers of styrene and acrylate. The latex binders are often stabilized with anionic surfactants.

The present cellulose ethers are much more versatile thickeners than earlier known associative nonionic cellulose ethers. The paint formulator has the possibility to affect the final paint properties to a very high extent. The present cellulose ethers can be used in all types of paints ranging from low to high PVC, and for interior as well as exterior use. They contribute to the following paint properties:
- low spatter
- good film build
- good flow and levelling
- low sag

The present invention and the advantages of the present cellulose ethers are further illustrated by the following examples.

### Comparative Example A

One mole of tetradecanol ethoxylated with 2 moles of ethylene oxide per mole of tetradecanol and one mole of epichlorohydrin were reacted in the presence of tin tetrachloride at a temperature of 60 to 70°C and a glycidyl ether was obtained. A solution of 30% sodium hydroxide in water was added at 80°C. After 30 minutes under vigorous stirring at 80°C, the resulting glycidyl ether was separated from the water phase. It had the structure 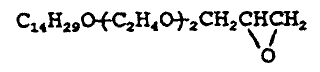 Powder of dissolving wood pulp was added to a reactor. After evacuation of the air, 0.7 g of sodium hydroxide (50%w/w in water) were first added per gram of wood pulp followed by addition of 0.84 g of ethylene oxide, 1.5 g of ethyl chloride and 0.040 g of the glycidyl ether calculated on one gram of wood pulp. After the additions the temperature in the reactor was increased to 55°C and held there for 50 minutes. The temperature was then increased to 105°C and maintained for 50 minutes. The cellulose ether obtained was washed with boiling water and neutralised with acetic acid. The cellulose ether had a MS_{hydroxyethyl}=2.1, a DS_{ethyl}=0.8, and a DS_{R}=0.008, where R is the group

C₁₄H₂₉O(̵C₂H₄O)̵₂CH₂CH(OH)CH₂-

### Example B

Example A was repeated but the tetradecanol ethoxylate had 5 moles of ethylene oxide per mole of tetradecanol. The tetradecanol ethoxylate and epichlorohydrin were reacted and a glycidyl ether of the formula 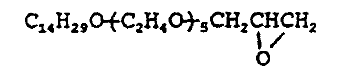 was obtained. In the production of the cellulose ether the amount of glycidyl ether was 0.055 g per g of wood pulp. The cellulose ether obtained had a MS_{hydroxyethyl}=2.1, a DS_{ethyl}=0.8, and a DS_{R}=0.007, where R is the group

C₁₄H₂₉O(̵C₂H₄O)̵₅CH₂CH(OH)CH₂-

### Comparative Example C

Example A was repeated but a hexadecanol ethoxylate with 2 moles of ethylene oxide per mole of hexadecanol was used instead of the tetradecanol ethoxylate. The hexadecanol ethoxylate and epichlorohydrin were reacted and a glycidyl ether of the formula 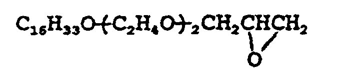 was obtained. In the production of the cellulose ether the amount of glycidyl ether was 0.042 g per g of wood pulp. The cellulose ether obtained had a MS_{hydroxyethyl}=2.1, a DS_{ethyl}=0.8, and a DS_{R}=0.008, where R is the group

C₁₆H₃₃O(̵C₂H₄O)̵₂CH₂CH(OH)CH₂-

### Example D

Example B was repeated but hexadecanol ethoxylate with 5 moles of ethylene oxide per mole of hexadecanol was used instead of the tetradecanol ethoxylate. The hexadecanol ethoxylate and epichlorohydrin were reacted and a glycidyl ether of the formula 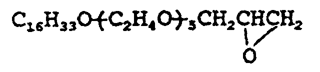 was obtained. In the production of the cellulose ether the amount of glycidyl ether was 0.058 g per g of wood pulp. The cellulose ether obtained had a MS_{hydroxyethyl}=2.1, a DS_{ethyl}=0.8, and a a DS_{R}=0.008, where R is the group

C₁₆H₃₃O(̵C₂H₄O)̵₅CH₂CH(OH)CH₂-

### Comparative Example E

Example A was repeated but an oleylalcohol ethoxylate with 2 moles of ethylene oxide per mole of oleylalcohol was used instead of the tetradecanol ethoxylate. The oleylalcohol ethoxylate and epichlorohydrin were reacted and a glycidyl ether of the formula 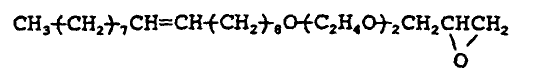 was obtained. In the production of the cellulose ether the amount of glycidyl ether was 0.053 g per g of wood pulp. The cellulose ether obtained had a MS_{hydroxyethyl}=2.1, a DS_{ethyl}=0.8, and a DS_{R}=0.008, where R is the group

CH₃(̵CH₂)̵₇CH=CH(̵CH₂)̵₈O(̵C₂H₄O)̵₂CH₂CH(OH)CH₂-

### Example F

Example B was repeated but an oleylalcohol ethoxylate with 5 moles of ethylene oxide per mole of oleylalcohol was used instead of the tetradecanol ethoxylate. The oleyalcohol ethoxylate and epichlorohydrin were reacted and a glycidyl ether of the formula 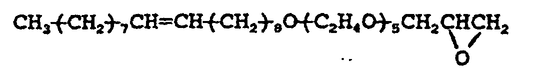 was obtained. In the production of the cellulose ether the amount of glycidyl ether was 0.065 g per g of wood pulp. The cellulose ether obtained had a MS_{hydroxyethyl}=2.1, a DS_{ethyl}=0.8, and a DS_{R}=0.008, where R is the group

CH₃(̵CH₂)̵₇CH=CH(̵CH₂)̵₈O(̵C₂H₄O)̵₅CH₂CH(OH)CH₂-

### Comparative Example G

Example B was repeated but an adduct mixture of 2-octyldecanol, 2-hexyldodecanol, 2-octyldodecanol, 2-hexyldecanol and 2 moles of ethylene oxide per mole of the alcohol mixture was used instead of the tetradecanol ethoxylate. The adduct mixture and epichlorohydrin were reacted and a glycidyl ether of the formula 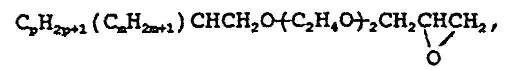 where p is 6-8 and m is 8-10, was obtained. In the production of the cellulose ether the amount of glycidyl ether was 0.047 g per g of wood pulp. The cellulose ether obtained had a MS_{hydroxyethyl}=2.1, a DS_{ethyl}=0.8, and a DS_{R}=0.006, where R is the group 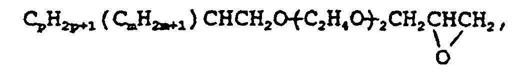 where p and m have meanings mentioned above.

### Example H

Example B was repeated but an adduct mixture of 2-octyldecanol, 2-hexyldodecanol, 2-octyldodecanol, 2-hexyldecanol and 5 moles of ethylene oxide per mole of the alcohol mixture was used instead of the tetradecanol ethoxylate. The adduct mixture and epichlorohydrin were reacted and a glycidyl ether of the formula 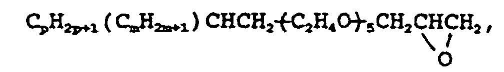 where p is 6-8 and m is 8-10, was obtained. In the production of the cellulose ether the amount of glycidyl ether was 0.065 g per g of wood pulp. The cellulose ether obtained had a MS_{hydroxyethyl}=2.1, a DS_{ethyl}=0.8, and a DS_{R}=0.004, where R is the group

CₚH₂ₚ₊₁(CₘH₂ₘ₊₁)CHCH₂O(̵C₂H₄O)̵₅CH₂(OH)CH₂-,

where p and m have meanings mentioned above.

### Comparative Example I

Example A was repeated but tetradecanol and epichlorohydrin were directly reacted and a glycidyl ether of the formula 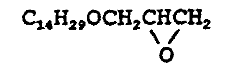 was obtained. In the production of the cellulose ether the amount of the glycidyl ether was 0,029 g per g of wood pulp. The cellulose ether obtained had a MS_{hydroxyethyl}=2.1, a DS_{ethyl}=0.8, and a DS_{R}=0.09, where R is the group

C₁₄H₁₉OCH₂CH(OH)CH₂

### Example 1

A cellulose ether solution containing 1% by weight of any one of the cellulose ethers in Examples A-I in deionised and distilled water were prepared. The viscosities of the solutions were measured with a StressTech rheometer from Rheologica, equipped with a 4 cm 1° cone and plate system, at 20°C ± 0.1°C. The rheometer was put in the constant shear mode and all the viscosities were measured at the newtonian plateau, characterized by a shear rate independent viscosity. The following results were obtained.

| **Test No** | **Cellulose ether** | | | | **Viscosity mPa.s** | **DP Viscosity mPa.s** |
|---|---|---|---|---|---|---|
| | **Example** | **Alipatic group** | **n** | **D8**_{**R**} | | |
| 1 | A* | C₁₄H₂₉- | 2 | 0.008 | 1660 | 47 |
| 2 | B | C₁₄H₂₉- | 5 | 0.007 | 2851 | 52 |
| 3 | C* | C₁₆H₃₃- | 2 | 0.008 | 561 | 55 |
| 4 | D | C₁₆H₃₃- | 5 | 0.008 | 721 | 54 |
| 5 | E* | Oleyl | 2 | 0.008 | 3172 | 54 |
| 6 | F | Oleyl | 5 | 0.008 | 4415 | 54 |
| 7 | G* | (1) | 2 | 0.006 | 2333 | 41 |
| 8 | H | (1) | 5 | 0.004 | 2565 | 46 |
| 9 | I* | C₁₄H₂₉- | 0 | 0.009 | 1300 | 92 |

| | | | | | | |
|---|---|---|---|---|---|---|
| * comparative example (1) = CₚH₂ₚ₊₁(CₘH₂ₘ₊₁)CHCH₂-, where p is 6-8 and m is 8-10. | | | | | | |

From the results it is evident that the thickening efficiency of the cellulose ethers increases with the length of the spacers. The low viscosities of the water solution of the cellulose ethers C and D depend on the fact that phase separation occurs at 20°C.

### Example 2

Semi-gloss latex paints were prepared and one of the cellulose ethers in examples A-I was added in such an amount that a latex paint of a Stormer viscosity of 110 KU was obtained.

The latex paints had the following composition.

| **Ingredient** | **Parts by weight** |
|---|---|
| Water | 243.5 - x |
| Cellulose ether | x |
| Bactericide | 1 |
| Dispersing agent | 6,5 |
| Defoamer | 5 |
| Titanium dioxide | 180 |
| Calcium carbonate | 110 |
| Latex (Vinamul® 3650) | 454 |

The amounts of cellulose ether needed to obtain a Stormer viscosity of 110 were as follows.

| Test No | Cellulose ether Example | Spacer n | Amount parts by weight |
|---|---|---|---|
| 10 | A* | 2 | 4.0 |
| 11 | B | 5 | 3.5 |
| 12 | C* | 2 | 4.1 |
| 13 | D | 5 | 3.7 |
| 14 | E* | 2 | 3.0 |
| 15 | F | 5 | 2.8 |
| 16 | G* | 2 | 4.0 |
| 17 | H | 5 | 3.5 |
| 18 | I* | 0 | 4.0 |

| | | | |
|---|---|---|---|
| * comparative example | | | |

From the results it is evident that the cellulose ethers with the longer ethylene oxide spacer (Tests 11, 13, 15 and 17) give a latex paint with a Stormer viscosity of 110 KU at a lower amount of addition than the cellulose ethers with shorter spacers. In the paint formulation the cellulose ethers of Examples C and D do not cause any phase separations.

## Claims

1. A nonionic associative cellulose ether, **characterized in that** it has a DP-viscosity of 15-200 mPa·s, measured for a 1% by weight of cellulose ether dissolved in a blend of diethylene glycol monobutylether and water in a ratio of 20:80 divided by factor 2.7 and contains a modifying hydrophobic group of the formula 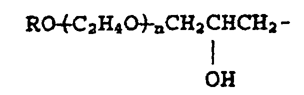 where R is an aliphatic group of 12-22 carbon atoms and n is a number from 3 to 7, with a degree of substitution of the hydrophobic group of 0.003-0.012.

2. A cellulose ether according to claim 1, **characterized in that** R is an aliphatic group of 14-20 carbon atoms and n is a number from 3 to 5.

3. A cellulose ether according to claim 1 or 2, **characterized in that** the cellulose ether is a modified water-soluble alkyl cellulose, hydroxyalkyl cellulose or alkyl hydroxyalkyl cellulose.

4. A cellulose ether according to claim 3, **characterized in that** the cellulose ether is a modified methyl hydroxyethyl cellulose, ethyl hydroxyethyl cellulose, methyl ethyl hydroxyethyl cellulose or hydroxyethyl cellulose.

5. A cellulose ether according to any one of claims 1 to 4, **characterized in that** it has a DP viscosity of 20-100 mPa·s.

6. A cellulose ether according to any one of claims 1 to 5, **characterized in that** it has a viscosity of 100-12000 mPa·s measured in 1% water solution at 20°C.

7. A paint composition **characterized in that** it comprises a film forming latex and an aqueous phase thickened with a nonionic cellulose ether according to any one of claims 1 to 6.

8. Use of the cellulose ethers according to any one of claims 1 to 7 as a colloid stabilizer, thickener or rheology modifier.

## Patentansprüche

1. Nichtionischer assoziativer Celluloseether, **dadurch gekennzeichnet, dass** er eine DP-Viskosität von 15 - 200 mPa·s hat - die für einen 1 gewichtsprozentigen Celluloseether, der in einer Mischung von Diethylenglycolmonobutylether und Wasser in einem Verhältnis von 20:80 gelöst ist, gemessen wurde und durch den Faktor 2,7 dividiert wurde - und eine modifizierende hydrophobe Gruppe der Formel 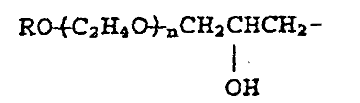 enthält, in der R eine aliphatische Gruppe mit 12 bis 22 Kohlenstoffatomen ist und n eine Zahl von 3 bis 7 ist, wobei der Substitutionsgrad der hydrophoben Gruppe 0,003 bis 0,012 ist.

2. Celluloseether gemäß Anspruch 1, **dadurch gekennzeichnet, dass** R eine aliphatische Gruppe mit 14 bis 20 Kohlenstoffatomen ist und n eine Zahl von 3 bis 5 ist.

3. Celluloseether gemäß den Ansprüchen 1 oder 2, **dadurch gekennzeichnet, dass** der Celluloseether modifizierte wasserlösliche Alkylcellulose, Hydroxyalkylcellulose oder Alkylhydroxyalkylcellulose ist.

4. Celluloseether gemäß Anspruch 3, **dadurch gekennzeichnet, dass** der Celluloseether modifizierte Methylhydroxyethylcellulose, Ethylhydroxyethylcellulose, Methylethylhydroxyethylcellulose oder Hydroxyethylcellulose ist.

5. Celluloseether gemäß irgendeinem der Ansprüche 1 bis 4, **dadurch gekennzeichnet, dass** er eine DP-Viskosität von 20 - 100 mPa·s hat.

6. Celluloseether gemäß irgendeinem der Ansprüche 1 bis 5, **dadurch gekennzeichnet, dass** er eine Viskosität von 100 - 12 000 mPa·s, gemessen in einer 1%igen wässrigen Lösung bei 20 °C, hat.

7. Lack-Zusammensetzung, **dadurch gekennzeichnet, dass** sie einen filmbildenden Latex und eine wässrige Phase umfasst, die mit einem nichtionischen Celluloseether gemäß irgendeinem der Ansprüche 1 bis 6 verdickt ist.

8. Verwendung der Celluloseether gemäß irgendeinem der Ansprüche 1 bis 7 als Kolloid-Stabilisator, Verdickungsmittel oder als Viskositätsveränderer.

## Revendications

1. Ether de cellulose associatif non-ionique, **caractérisé en ce qu'**il a une viscosité DP de 15-200 mPa.s, mesurée pour 1 % en poids d'éther de cellulose dissous dans un mélange d'éther monobutylique de diéthylèneglycol et d'eau en un rapport de 20/80, divisée par un facteur de 2,7, et **en ce qu'**il contient un groupe hydrophobe modificateur de formule : 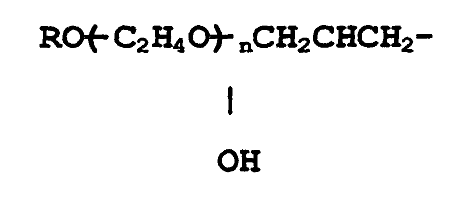 dans laquelle R est un groupe aliphatique ayant de 12 à 22 atomes de carbone et n est un nombre de 3 à 7, ayant un degré de substitution du groupe hydrophobe de 0,003-0,012.

2. Ether de cellulose selon la revendication 1, **caractérisé en ce que** R est un groupe aliphatique ayant de 14 à 20 atomes de carbone et n est un nombre de 3 à 5.

3. Ether de cellulose selon la revendication 1 ou 2, **caractérisé en ce que** l'éther de cellulose est une alkylcellulose, hydroxyalkylcellulose ou alkylhydroxyalkylcellulose soluble dans de l'eau modifiée.

4. Ether de cellulose selon la revendication 3, **caractérisé en ce que** l'éther de cellulose est une méthylhydroxyéthylcellulose, éthylhydroxyéthylcellulose, méthyléthylhydroxyéthylcellulose ou hydroxyéthylcellulose, modifiées.

5. Ether de cellulose selon l'une quelconque des revendications 1 à 4, **caractérisé en ce qu'**il a une viscosité DP de 20-100 mPa.s.

6. Ether de cellulose selon l'une quelconque des revendications 1 à 5, **caractérisé en ce qu'**il a une viscosité de 100-12000 mPa.s mesurée dans une solution aqueuse à 1 % à 20°C.

7. Composition de peinture **caractérisée en ce qu'**elle comprend un latex filmogène et une phase aqueuse épaissie avec un éther de cellulose non-ionique selon l'une quelconque des revendications 1 à 6.

8. Utilisation des éthers de cellulose selon l'une quelconque des revendications 1 à 7 en tant que stabilisant colloïdal, épaississant ou agent modifiant la rhéologie.
